# EUROPEAN PATENT APPLICATION

(11) **EP 3 093 252 A1**
(43) Date of publication of application: **16.11.2016**
(21) Application number: 15199962.0
(22) Date of filing: 14.12.2015
(51) Int. Cl.: B65D 33/25, C08L 67/02

(54) **SOFT PET-G RESIN COMPOSITION AND SOFT FILM AND ZIPPER FOR ZIPPER STORAGE BAG FABRICATED USING THE SAME**

(30) Priority: 12.05.2015 KR 20150065706
(71) Applicant: Youngil Co. Ltd., Gwangju City 464-874 (KR)
(72) Inventor: LEE, HO-YOUNG, 472-725 Gyonggi-do (KR)
(74) Representative: Kloiber, Thomas

(57) **Abstract**

The present invention relates to a soft PET-G resin composition and a soft film and a zipper for zipper storage bag fabricated using the resin composition. More particularly, the present invention relates to a soft PET-G resin composition and a soft film and a zipper for zipper storage bag fabricated using the resin composition, where the soft PET-G resin composition compensates for the properties by using a thermoplastic polyester elastomer (TPEE) in addition to glycol-modified polyethylene terephthalate (PET-G), lowers the hardness using a vegetable oil and a methyl methacrylate butadiene styrene (MBS) resin, and enhances the properties and processability using a processing aid, which resin composition can be extruded into a soft film or a zipper for zipper storage bag that is so soft and excellent in flexibility as to replace a PVC zipper for zipper storage bag.

## Description

### TECHNICAL FIELD

The present invention relates to a soft PET-G resin composition and a soft film and a zipper for zipper storage bag fabricated using the resin composition. More particularly, the present invention relates to a soft PET-G resin composition and a soft film and a zipper for zipper storage bag fabricated using the resin composition, where the soft PET-G resin composition compensates for the properties by using a thermoplastic polyester elastomer (hereinafter, referred to as "TPEE") in addition to glycol-modified polyethylene terephthalate (hereinafter, referred to as "PET-G"), lowers the hardness using a vegetable oil and a methyl methacrylate butadiene styrene (hereinafter, referred to as "MBS") resin, and enhances the properties and processability using a processing aid, which resin composition can be extruded into a soft film or a zipper for zipper storage bag that is so soft and excellent in flexibility as to replace a PVC zipper for zipper storage bag.

### BACKGROUND OF THE INVENTION

In the production of a vinyl zipper storage bag, a PVC resin having Shore D hardness between 60-80 is extruded into male and female slides to form a plastic zipper for zipper storage bag, and the zipper is adhered to a plastic fabric cut in proper size through high frequency sealing.

The plastic fabric used for the plastic zipper for zipper storage bag made of a plastic fabric that is a synthetic resin is primarily a PVC fabric available to high frequency sealing.

With the problem regarding the environmental issue, the polyurethane fabric made of polyurethane is partly replacing the PVC plastic fabric. But, the complete replacement of the polyurethane fabric for the PVC plastic fabric is impossible because it has the difficulty in the secondary processing.

In addition, the olefin-based resins such as PE or PP are not available to the high frequency sealing with the fabric for zipper storage bag. Hence, these resins are impossible to replace the PVC fabric or to extrude into a zipper for zipper storage bag.

The background technique of the present invention is Korean Patent Application No. 1370778 under the title of "a synthetic resin zipper having high flexibility and a satisfactory zipper engagement property" (Patent Document 1). In this background technique, there is disclosed a synthetic resin zipper that includes a fixing portion of a synthetic resin zipper coil laminated along the top surface on the one size of a fabric tape, a stiffener material inserted into the zipper coil to make the zipper head portion project in a defined length on the lateral side of the fabric tape, and sliders adhered to both sides of the fabric tape with a sewing yarn to form a lock on the zipper head portion. In the synthetic resin zipper, a looper sheet thinner than the fabric tape is applied on the surface of the fixing portion in the lengthwise direction of the fabric tape, and two looper yarns are applied on the surface of the looper sheet and bound to the sewing yarn. In this regard, the looper yarns are inserted into the sewing yarn loop to form a looper yarn loop, and the sewing yarn loop is then inserted into the looper yarn loop. The one end of the looper yarn loop goes into the sewing yarn loop through the beneath of the sewing yarn loop and passes through the top side of the sewing yarn loop and then into the sewing yarn loop to form a new looper yarn loop. Then, the next sewing yarn loop is inserted into the new looper yarn loop. This procedure is performed in the repeated pattern to make a structure that the looper yarn compresses the looper sheet to press the fixing portion of the zipper coil with the looper yarn and the looper sheet together. The synthetic resin zipper displays high flexibility and good zipper engagement performance.

This background technique is designed to maintain high elasticity and softness by modifying the structure without changing the material of the zipper. However, the structure of the background technique is too complicated with high production cost and the synthetic resin, if used for the zipper, is impossible to replace with eco-friendly resins.

### REFERENCE TO SEQUENCE LISTING

### (PATENT DOCUMENT 1)

Korean Patent Application No. 1370778 under the title of "a synthetic resin zipper having high flexibility and a satisfactory zipper engagement property"

### TECHNICAL PROBLEM

The present invention is to provide a composition that uses a TPEE resin in addition to a PET-G resin to lower the hardness and compensate for the properties, and a soft film and a zipper for plastic zipper storage bag manufactured using the composition.

The PET-G resin generally has Shore D hardness of 90 or higher and is unavailable in the manufacture of high-quality zippers for plastic zipper storage bag due to poor properties in terms of heat resistance, cold resistance and processability even with a plasticizer, an oil, or the like added to lower the hardness. In order to solve this problem, the present invention is to provide a soft PET-G resin composition and a soft film and a zipper for zipper storage bag that are prepared using the resin composition, where the composition can be obtained by adding a TPEE resin of low hardness to lower the hardness with good properties such as Shore D hardness between 60-70.

### SOLUTION TO PROBLEM

The present invention may provide a soft glycol-modified polyethylene terephthalate (PET-G) resin composition comprising 10 to 140 parts by weight of a thermoplastic polyester elastomer (TPEE) with respect to 100 parts by weight of a PET-G resin.

The present invention may also provide a soft PET-G resin composition that further comprises 5 to 90 parts by weight of a vegetable oil with respect to 100 parts by weight of the PET-G resin.

The present invention may also provide a soft PET-G resin composition that further comprises 0.4 to 2.4 parts by weight of a processing aid with respect to 100 parts by weight of the PET-G resin.

The present invention may also provide a soft PET-G resin composition in which the processing aid is a polytetrafluoroethylene (PTFE) resin.

The present invention may also provide a soft film prepared by extruding the soft PET-G resin composition to a thickness of 0.01 mm to 0.3 mm.

The present invention may also provide a zipper for zipper storage bag formed by extruding the soft PET-G resin composition.

### ADVANTAGE EFFECTS OF INVENTION

The soft PET-G resin composition and the soft film and the zipper for zipper storage bag that are composed of the soft PET-G resin composition according to the present invention use a TPEE resin having a low hardness in addition to a PET-G resin to lower the hardness, enhance the heat resistance and the cold resistance and improve the processability, thereby replacing a PVC zipper for zipper storage bag.

Generally, the PVC zipper used as a zipper for vinyl zipper storage bag is made of a PVC material having Shore D hardness between 65-75. Such a soft zipper for vinyl zipper storage bag is difficult to form using a composition of low hardness that includes only a mixture of PET-G and TPEE. Contrarily, the present invention uses a small amount of oil added to form a composition of low hardness and thus provides a composition having such a low hardness as to fabricate a soft zipper for vinyl zipper storage bag, making it possible to prepare a soft film and a zipper for zipper storage bag. Using the low-hardness composition enables production of a soft zipper for vinyl zipper storage bag, which can usefully replace the PVC zipper for zipper storage bag.

### BRIEF DESCRIPTION OF DRAWINGS

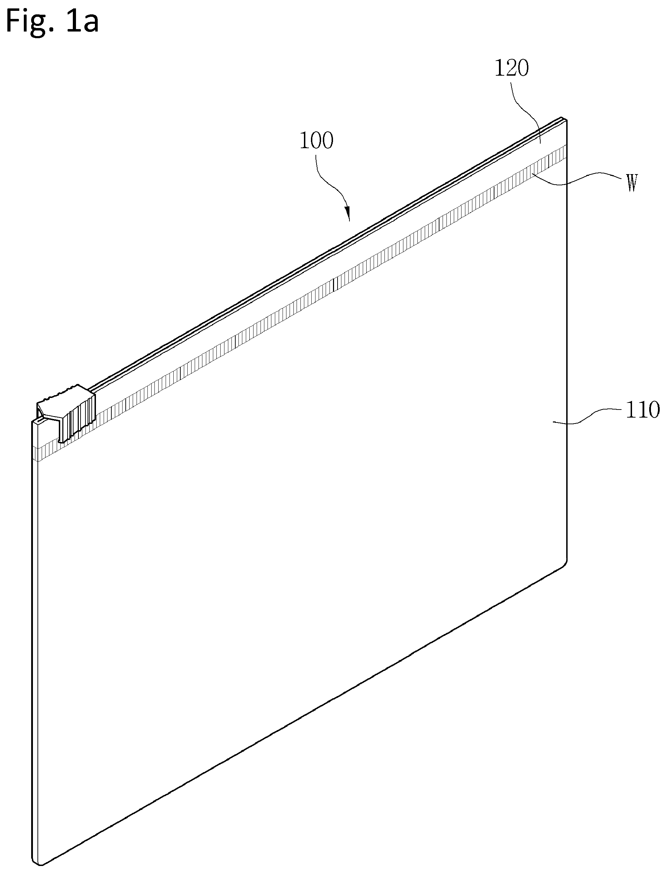

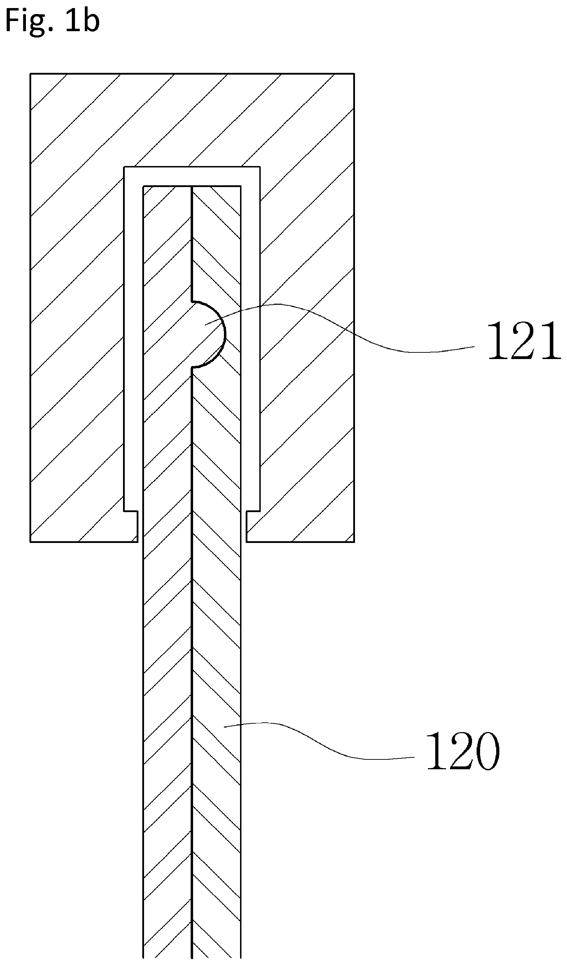

FIG. 1 illustrates a general vinyl zipper storage bag, where FIG. 1a is a perspective view of the vinyl zipper storage bag and FIG. 1b is a cross-sectional view showing the male and female slides of the vinyl zipper storage bag.

### DESCRIPTION OF EMBODIMENTS

Hereinafter, the disclosure of the present invention will be described in further detail with reference to examples and experimental examples, which are given for the understanding of the disclosure of the present invention and not intended to limit the scope of the claims in the present invention.

The technical construction of the present invention will not be described in detail in accordance with the preferred embodiments of the present invention as follows.

The present invention provides a resin composition that contains a TPEE resin in addition to a PET-G resin to compensate for the properties, lowers the hardness using a vegetable oil, and enhances the properties and the processability using a processing aid, and a soft film and a zipper for zipper storage bag that are formed from the resin composition through extrusion to enhance flexibility, and thus realizes an alternative to the PVC materials, making it possible to manufacture a soft vinyl zipper storage bag with high printability and good properties.

Generally, the vinyl zipper storage bag is made of a soft PVC material. But the use of the PVC material for the vinyl zipper storage bag is avoided due to the toxicity of the PVC material and environmental issues. The PVC material is in some cases replaced by olefin-based materials such as PP or PE, the poor processability of which leads to failure. Polyurethane may also be partly used to replace the PVC material, but with some problems in regards to the processing.

In the production of a vinyl zipper storage bag 100, as illustrated in FIG. 1, a fabric for vinyl zipper storage bag 110 is formed through the extrusion method and cut into a given size, and a zipper 120 separately prepared is adhered to the cutout fabric for vinyl zipper storage bag 110 through high frequency sealing to complete the vinyl zipper storage bag 100.

The zipper 120 for vinyl zipper storage bag used in the vinyl zipper storage bag 100 is constructed such that interlocking male and female elements are very precisely formed in the shape of a projection and a groove and get in engagement to produce a lock.

Usually, the zipper 120 for vinyl zipper storage bag used in the vinyl zipper storage bag 100 adopts a PVC material having Shore D hardness between 60-80.

The olefin-based plastics such as PP or PE are nontoxic and good in terms of environmental properties but have poor processability in the extrusion processing into interlocking male and female elements, making it impossible to produce the zipper 120 for vinyl zipper storage bag with precision. Even if the production of the zipper 120 for vinyl zipper storage bag is possible using the olefin-based plastics, the olefin-based plastics are not applicable to the high frequency sealing for adhering the zipper 120 for vinyl zipper storage bag to fabric for vinyl zipper storage bag 110 and thus unavailable to the zipper 120 for vinyl zipper storage bag 100 used in the vinyl zipper storage bag.

Polyurethane, which is a plastic material available to high frequency sealing and having Shore D hardness of 75 or less, is also partly used to replace the PVC material due to its poor extrusion processability and post-processability.

As a solution to this problem, there is used a PET-G resin that has eco-friendliness and good high-frequency processability.

The PET-G resin, which usually has Shore D hardness of 95 or greater, can be used in combination with a plasticizer or an oil to lower the hardness to Shore D hardness of 65 or less. In this case, however, the addition of the oil to lower the hardness may deteriorate heat resistance and cold resistance and cause a rapid deterioration of the extrusion processability, making it impossible to produce interlocking male and female elements with precision. PET-G and TPEE, good in compatibility, are available as an alternative in the manufacture of products having Shore D hardness of about 40 and good in the high frequency processability, but they are opaque.

Generally, the zipper 120 for vinyl zipper storage bag is mostly a transparent or translucent product. A solution to this problem is adding 10 to 30 parts by weight of the TPEE resin having low hardness to the PET-G resin, making it possible to produce a zipper for vinyl zipper storage bag with good quality.

The present invention uses, as a substrate resin, the PET-G resin that is designed to develop an eco-friendly material having such good properties and processability as to replace the soft PVC material.

The PET-G resin is known to be eco-friendly and relatively inexpensive and thus used mainly for hard sheets, food containers, etc. But, the PET-G resin is too hard of softening to use in the manufacture of soft films or soft sheets.

Therefore, the present invention uses the PET-G resin in combination with the TPEE resin to compensate for the properties and thus secures both good properties and post-processability by acquiring the merits of the PET-G, i.e., eco-friendliness, weather resistance and transparency, and those of the TPEE resin, i.e., good heat resistance and cold resistance.

The TPEE resin is a resin having high tensile strength at high temperature, low compression set (low compressive permanent deformation), good chemical resistance, cold resistance, weather resistance and processability. Preferably, the TPEE resin as used herein is a TPEE resin having a low melting temperature and a low hardness.

The soft PET-G resin composition used in the zipper for vinyl zipper storage bag and the soft film using the soft PET-G resin composition of the present invention includes 10 to 140 parts by weight of the TPEE resin with respect to 100 parts by weight of the PET-G resin.

### <Experimental Example 1>

### Zipper for PVC vinyl zipper storage bag

If varying somewhat depending on the type of the plasticizer, the zipper for PVC vinyl zipper storage bag mostly uses PVC with the content of the plasticizer between 20 and 30 parts by weight and has Shore D hardness between 60-80.

Accordingly, the experimental example 1 relates to the use of the PET-G in the preparation of materials having an adequate hardness to manufacture the zipper 120 for PVC vinyl zipper storage bag. The compositions are given as presented in Table 1.

**[Table 1]**

| Div. | | Ingredient (Unit: g) | | Hardness (A) |
|---|---|---|---|---|
| | | PET-G | TPEE | |
| Example | 1 | 1000 | 50 | D hardness 90±3 |
| | 2 | 1000 | 100 | 86±3 |
| | 3 | 1000 | 200 | 79±3 |
| | 4 | 1000 | 300 | 75±3 |
| | 5 | 1000 | 400 | 69±3 |
| | 6 | 1000 | 500 | 68±3 |
| | 7 | 1000 | 600 | 68±3 |

| | | | | |
|---|---|---|---|---|
| * TPEE (Thermoplastic Polyester Elastomer) is KP3340 manufactured by Colon Co. | | | | |

As a result of adding 5 to 60 parts by weight of the TPEE resin to 100 parts by weight of the PET-G resin as shown in Table 1, the heat resistance is improved when using at least 10 parts by weight of the TPEE resin and the hardness available to replace the zipper for PVC vinyl zipper storage bag is acquired when using at least 20 parts by weight of the TPEE resin as sown in Example 3. With the TPEE resin content is between 40 and 50 parts by weight, the properties are well improved, but with deterioration in the transparency. Further, the TPEE resin content of 60 parts by weight or greater as shown in Example 7 leads to the final product almost opaque and the rise of the production cost due to an excess of the expensive TPEE resin used with respect to the effect of improving the quality.

Accordingly, the zipper 120 for PVC vinyl zipper storage bag preferably includes 10 to 50 parts by weight of the TPEE resin with respect to 100 parts by weight of the PET-G resin.

### <Experimental Example 2>

Generally, the soft PVC film commonly used for plastic bag primarily uses a PVC resin containing 40 to 60 parts by weight of a plasticizer with respect to 100 parts by weight of the PVC film or a soft PVC resin (Shore D hardness 60±3 to A hardness 85±3) containing 70 parts by weight of a plasticizer with respect to 100 parts by weight of the PVC film.

As the zipper for zipper storage bag needs to maintain a defined hardness in Table 1 of Experimental Example 1, the hardness can be reduced more or less by adding the TPEE resin to the PET-G as shown in Table 1. But, there is a limitation in preparing a low-hardness composition having Shore D hardness of 65±3 or less even when a low-hardness TPEE resin (Shore D hardness 40±3) is further used.

Therefore, experiments are performed according to Table 2 in order to prepare compositions having the Shore D hardness similar to that of the soft PVC.

**[Table 2]**

| Div. | | Ingredient (Unit: g) | | | Hardness (D) |
|---|---|---|---|---|---|
| | | PET-G | TPEE | Palm oil | |
| Example | 1 | 1000 | 200 | 50 | D hardness 76±3 |
| | 2 | 1000 | 200 | 100 | D hardness 70±3 |
| | 3 | 1000 | 200 | 200 | D hardness 66±3 |
| | 4 | 1000 | 300 | 200 | A hardness 98±3 |
| | 5 | 1000 | 300 | 300 | A hardness 96±3 |
| | 6 | 1000 | 500 | 400 | A hardness 95±3 |
| | 7 | 1000 | 600 | 500 | A hardness 94±3 |

**[Table 3]**

| Div. | | Ingredient (Unit: g) | | | Hardness (A) | Palm oil % | TPEE % |
|---|---|---|---|---|---|---|---|
| | | PET-G | TPEE | Palm oil | | | |
| Example | 8 | 1000 | 600 | 600 | 91±3 | 37.5 | 37.5 |
| | 9 | 1000 | 800 | 700 | 89±3 | 38.9 | 47.0 |
| | 10 | 1000 | 1000 | 700 | 90±3 | 35.0 | 58.8 |
| | 11 | 1000 | 1100 | 900 | 87±3 | 42.8 | 57.9 |
| | 12 | 1000 | 1200 | 900 | 90±3 | 40.9 | 63.2 |
| | 13 | 1000 | 1400 | 900 | 93±3 | 37.5 | 73.7 |
| | 14 | 1000 | 1600 | 1000 | 97±3 | 38.4 | 80.0 |

| | | | | | | | |
|---|---|---|---|---|---|---|---|
| * 1) The percentage (%) of palm oil is the percentage (%) of the mixture of PET-G and TPEE. 2) The percentage (%) of TPEE is the percentage (%) of the mixture of PET-G and palm oil. | | | | | | | |

As for the Examples 1, 2 and 3 of Table 2, 20 parts by weight of the TPEE resin is added to 100 parts by weight of the PET-G resin, and 5 to 20 parts by weight of palm oil is further added to the mixture. As a result, the compositions can acquire Shore D hardness between 60±3 and 76±3 as to replace the zipper for PVC vinyl zipper storage bag and display good properties in terms of processability, heat resistance, viscosity, etc. But, when the content of palm oil is 20 parts by weight or greater, the compositions have a drastic decrease in the viscosity and deterioration in the extrusion processability and heat resistance.

In the Examples 1, 2 and 3 of Table 2, the experiments to obtain a composition having an adequate hardness suitable to the manufacture of vinyl zippers show that compositions with good processability and adequate hardness can be prepared.

The vinyl zipper using the composition according to the Example 3 of Table 2 is a very soft one of the vinyl zippers that has such a hardness as to be available to the manufacture of high-hardness soft films or thin films, but with a little bit poor heat resistance.

The Example 4 of Table 2 maintains the contents of PET-G and palm oil of the Example 3 of Table 2 in order to compensate for the shortcoming of the Example 3 of Table 2, that is, deterioration of the heat resistance and uses an increased amount of the TPEE resin to 20 to 30 parts by weight to improve the heat resistance.

In Example 5 to 14 of Tables 2 and 3, an experiment is performed to obtain a composition for soft film.

The PVC film does not have the oil flowing out from the surface even if using 150 parts by weight of the plasticizer added to the PVC to get softening with respect to 100 parts by weight of the PVC. But, the PET-G or TPEE resin, if using at least 40 % of the oil added to make a soft film, possibly has the oil flowing out from the surface. The composition for making a soft film having low hardness can be prepared by adding an oil in an increased amount to the composition for making a soft film having high hardness, so it can have the oil flowing out from the surface and deterioration in the processability and heat resistance due to an excess of the oil used

Experiments for high-hardness soft films (A Hardness 100 to 95±3) or thin films (0.01 mm to 0.05 mm) are performed to increase the oil content and the TPEE content as shown in the Examples 5, 6 and 7 of Table 2.

The TPEE resin is better in oil absorption than the PET-G resin and has excellences in heat resistance, cold resistance, processability, elasticity, and compatibility with the PET-G resin.

It is therefore desirable to increase the TPEE content with an increase in the oil content in order to enhance the effect of inhibiting the oil flowing out from the surface and improving properties, such as heat resistance, cold resistance, processability, elasticity, etc.

The Examples 8 to 14 of Table 3 show the experiments performed to increase the oil content in the range of 60 to 100 parts by weight with respect to 100 parts by weight of the PET-G.

The oil content is maintained to about 40 % of the mixed amount of the PET-G, TPEE and oil in order to prevent the oil flowing out from the surface.

The Example 9 of Table 3 shows that the composition having A hardness of about 89±3 suitable for low-hardness soft films or thick films (0.1 mm to 0.3 mm) does not have the oil flowing out from the surface and is more excellent in the heat resistance and cold resistance than the soft PVC.

The Example 11 of Table 3 displays good properties, including A hardness of 87±3, which is about 70% of the A hardness of the PVC. The shortcomings of the soft PVC are low thermal deformation temperature, a little of the oil flowing out from the surface and a slightly higher hardness than the PVC material for very soft films.

The experiments in the Examples 8 to 12 of Table 3 can obtain compositions with good properties such as a hardness of 85±3 suitable for soft films.

The Examples 10 and 11 of Table 3 are a little different in the glossiness but entirely the same in the properties.

The Example 10 has a hardness a little higher than 70 phr of the PVC but all the good properties required to low-hardness soft films, such as heat resistance, cold resistance, weather resistance, elasticity, surface strength (scratch resistance), processability, etc. The Examples 12, 13 and 14 of Table 3 display excellences in heat resistance, cold resistance and glossiness unlike the PVC, good weather resistance and cold resistance, which are the shortcomings of the TPU, and good post-processability.

The Examples 13 and 14 of Table 3 have no significant difference in properties. But, the Example 14 has an increased hardness due to using a large amount of the TPEE resin and causes a rise of the production cost with an excess of the expensive TPEE resin.

As shown in the Examples 8 and 14 of Table 3, a relative increase in the oil content causes the oil flowing out from the surface upon a long-term exposure to the environment at 60 °C or above. But, this phenomenon can be prevented by adding 3 to 15 parts by weight of the MBS resin that is good at oil absorption.

When the content of the MBS resin is less than 3 parts by weight, the effect of improving the properties appears hardly appears. When the content of the MBS resin is greater than 15 parts by weight, tensile strength and transparency deteriorate. It is thus preferable to use 3 to 15 parts by weight of the MBS resin.

The MBS resin is mainly used as an impact modifier for hard PVC or engineering plastics. The MBS resin primarily used as an impact modifier has good miscibility and compatibility with other resins and is thus used chiefly to improve the properties and processability of other resins.

The soft PET-G resin composition has a high hardness like the PET-G resin and thus needs a large amount of oil added to get softening. As a result of the experiment as in the Example 2, it is possible to obtain a composition with good properties for the sake of preventing the adverse effects of using a large amount of oil, such as the oil flowing out from the surface and the deterioration of processability.

Examples of the vegetable oil as used herein may include oils extracted from plants or plant seeds, such as palm oil, coconut oil, castor oil, grape-seed oil, jojoba oil, safflower oil, macadamia nuts oil, olive-seed oil, etc. Preferably, the vegetable oil may be palm oil.

### <Experimental Example 3>

**[Table 4]**

| Div. | Ingredient (Unit: g) | | | | Processability |
|---|---|---|---|---|---|
| | PET-G | TPEE | Palm oil | Processing aid | |
| Example 1 | 1000 | 200 | 50 | 3 | Good |
| Example 2 | 1000 | 200 | 100 | 5 | - |
| Example 3 | 1000 | 200 | 150 | 10 | - |
| Example 4 | 1000 | 200 | 200 | 20 | - |

When the content of oil added to the PET-G resin is gradually increased from 5 parts by weight with the contents of the PET-G resin and the TPEE resin maintained, as shown in the Example 2, the viscosity lowers and the processability deteriorates.

The addition of oil to the PET-G resin causes deterioration in the processability. In order to enhance the deteriorated processability, the added amount of the processing aid is increased in proportion to the increment of the oil content, as presented in Table 4.

In the Example 1 of Table 4, the processability is enhanced by adding at least 0.3 parts by weight of the processing aid. When the oil content is 20 parts by weight or greater, it is required to increase the added amount of the processing aid to at least 2 parts by weight in order to acquire good processability.

Accordingly, it is preferable that the soft PET-G resin composition further includes 0.3 to 2.0 parts by weight of the processing aid with respect to 100 parts by weight of the PET-G resin.

The processing aids may come in different types. The preferred processing aid as used herein is the polytetrafluoroethylene (PTEE) resin. The PTEE resin is excellent in thermal stability and chemical resistance and also in processability due to its high melting strength and high viscosity.

The soft PET-G resin composition of the present invention can be used to form a soft zipper for zipper storage bag through extrusion molding or a soft film with a thickness of about 0.01 mm to 0.3 mm, which is available as a fabric for wrap or zipper storage bag.

The soft PET-G resin composition and the soft film and the zipper for zipper storage bag made of the soft PET-G resin composition according to the present invention as described above use a low-hardness TPEE resin in addition to the PET-G resin to lower the hardness, enhance the heat resistance and cold resistance and improve the processability, making it possible to form the soft film about 0.01 mm to 0.3 mm in thickness using the soft PET-G resin composition and the zipper for zipper storage bag being adhered to the soft film used as a fabric for zipper storage bag and thereby available to replace the PVC zipper.

In addition, the PVC zipper commonly used in the vinyl zipper storage bag is made of a PVC material having Shore D hardness between 60 and 80, and the zipper 120 for vinyl storage bag used for soft vinyl zipper storage bags is difficult to form using a low-hardness composition merely comprised of PET-G and TPEE. Contrarily, the present invention can obtain a composition having such a low hardness as to form the soft zipper 120 for vinyl zipper storage bag simply by adding a little amount of oil, making it possible to produce soft films and zippers for zipper storage bag, which can be used to manufacture soft zippers for vinyl zipper storage bag that almost replace PVC zippers.

The foregoing description of the invention has been presented for purposes of illustration and description, and obviously many modifications and variations are possible without departing from the principles and the substantial scope of the present invention. The scope of the claims of the present invention includes such modifications and variations belonging to the principles of the present invention.

## Claims

1. A soft glycol-modified polyethylene terephthalate (PET-G) resin composition comprising 10 to 140 parts by weight of a thermoplastic polyester elastomer (TPEE) with respect to 100 parts by weight of a PET-G resin.

2. The soft PET-G resin composition as claimed in claim 1, wherein the soft PET-G resin composition further comprises 5 to 90 parts by weight of a vegetable oil with respect to 100 parts by weight of the PET-G resin.

3. The soft PET-G resin composition as claimed in claim 2, wherein the soft PET-G resin composition further comprises 3 to 15 parts by weight of a methyl methacrylate butadiene styrene (MBS) resin with respect to 100 parts by weight of the PET-G resin.

4. The soft PET-G resin composition as claimed in claim 1, wherein the soft PET-G resin composition further comprises 0.3 to 2.0 parts by weight of a processing aid with respect to 100 parts by weight of the PET-G resin.

5. The soft PET-G resin composition as claimed in claim 3, wherein the processing aid is a polytetrafluoroethylene (PTFE) resin.

6. A soft film prepared by extruding the soft PET-G resin composition as claimed in any one of claims 1 to 5 to a thickness of 0.01 mm to 0.3 mm.

7. A zipper for zipper storage bag formed by extruding the soft PET-G resin composition as claimed in any one of claims 1 to 5.
